# DEMANDE DE BREVET EUROPEEN

(11) **EP 1 798 625 A1**
(43) Date de publication de la demande: **20.06.2007**
(21) Numéro de dépôt: 06291890.9
(22) Date de dépôt: 08.12.2006
(51) Int. Cl.: G05D 23/275

(54) **Dispositif de régulation thermostatique de chauffeau électrique**

(30) Priorité: 14.12.2005 FR 0512702
(71) Demandeur: S.A.T.E., 90150 Fontaine (FR)
(72) Inventeur: Martel, Jérôme, 68300 Saint Louis (FR)
(74) Mandataire: Laget, Jean-Loup

(57) **Abrégé**

Un dispositif de régulation thermostatique de chauffe-eau électrique comporte des moyens électromécaniques de régulation thermostatique destinés à être insérés dans un doigt de gant (DG) d'un chauffe-eau auquel le dispositif est destiné.

Lesdits moyens électromécaniques (3, 4) comportent un thermostat à bilame pourvu d'un moyen de transfert thermique.

Application à la fabrication et à la régulation de chauffe-eau électrique à accumulation.

## Description

L'invention est relative à un dispositif de régulation thermostatique de chauffe-eau électrique.

De manière courante, la régulation thermostatique et de déclenchement en sécurité de l'alimentation de la résistance de chauffage d'un chauffe-eau électrique est assurée par un thermostat électromécanique.

Un thermostat électromécanique de type connu peut comporter une chambre de température, peut être du type à lame bimétallique, à disque ou à bulbe, ou encore à dilatation de liquide agissant mécaniquement sur un contact électrique de puissance.

Le document FR 2 774 153 décrit un dispositif de gestion électronique pour chauffe-eau électrique à accumulation, comportant en combinaison des moyens électroniques de régulation thermostatique et de déclenchement de sécurité monté sur une carte électronique secondaire insérée dans un doigt de gant, des moyens de protection cathodique de la cuve du chauffe-eau par anode à courant imposé, et des moyens formant contacteur d'alimentation de la résistance de chauffage du chauffe-eau électrique.

Un premier but de l'invention est de perfectionner l'état de la technique connue, en assurant une régulation thermostatique d'un chauffe-eau électrique par des moyens non électroniques, tout en évitant l'usage des moyens électromécaniques de l'art antérieur.

On connaît, dans le domaine de la protection des moteurs électriques, des appareils de protection thermique comportant un thermostat à bilame qui ouvre un circuit électrique en cas d'échauffement et qui ferme ce circuit dès disparition de cet échauffement. Ces thermostats à bilame fonctionnent pratiquement entre deux températures voisines, en raison de l'inertie thermique du bilame : ce fonctionnement entre deux températures voisines entraîne un phénomène de battement thermique qui ne présente pas d'inconvénient pour la protection thermique des moteurs électriques.

Cependant, ce phénomène de battement thermique ne permet pas d'assurer une fonction efficace de régulation de la température d'un chauffe-eau électrique.

Un deuxième but de l'invention est de permettre l'utilisation d'un thermostat à bilame, en évitant les phénomènes d'hystérésis ou de battement thermique, de manière à effectuer une régulation thermostatique de chauffe-eau électrique au moyen d'un thermostat à bilame.

L'invention a pour objet un dispositif de régulation thermostatique de chauffe-eau électrique, comportant des moyens électromécaniques de régulation thermostatique destinés à être insérés dans un doigt de gant d'un chauffe-eau auquel le dispositif est destiné, caractérisé par le fait que lesdits moyens électromécaniques comportent un thermostat à bilame pourvu d'un moyen de transfert thermique.

Selon d'autres caractéristiques de l'invention :
- lesdits moyens électromécaniques comportent un fusible formant coupe-circuit thermique et monté en série avec ledit thermostat à bilame.
- le moyen de transfert thermique comporte un élément en matériau électriquement isolant et thermiquement conducteur.
- le moyen de transfert thermique comporte une coque externe en matériau métallique ou bon conducteur thermique.
- le moyen de transfert thermique comporte un remplissage en matériau électriquement isolant.
- le moyen de transfert thermique comporte un élément en silicone interposé entre le thermostat à bilame et une surface thermiquement conductrice.
- le moyen de transfert thermique contient un moyen d'isolation et de centrage du thermostat à bilame.
- le moyen d'isolation et de centrage du thermostat à bilame est réalisé en résine époxyde.
- le fusible formant coupe-circuit thermique est entouré d'une gaine thermorétractable.

L'invention a également pour objet un chauffe-eau électrique comportant un dispositif de régulation thermostatique suivant l'invention.

L'invention sera mieux comprise grâce à la description qui va suivre, donnée à titre d'exemple non limitatif en référence aux dessins annexés, dans lesquels :
- La figure 1 représente schématiquement une vue en coupe d'un dispositif selon l'invention monté sur une bride de fermeture de chauffe-eau électrique.
- La figure 2 représente schématiquement un graphique représentatif d'un essai d'adaptation de thermostat à bilame sur un chauffe-eau électrique.
- La figure 3 représente schématiquement une vue partielle en coupe d'un dispositif selon l'invention.
- La figure 4 représente schématiquement un graphique illustrant le fonctionnement d'un dispositif selon l'invention.

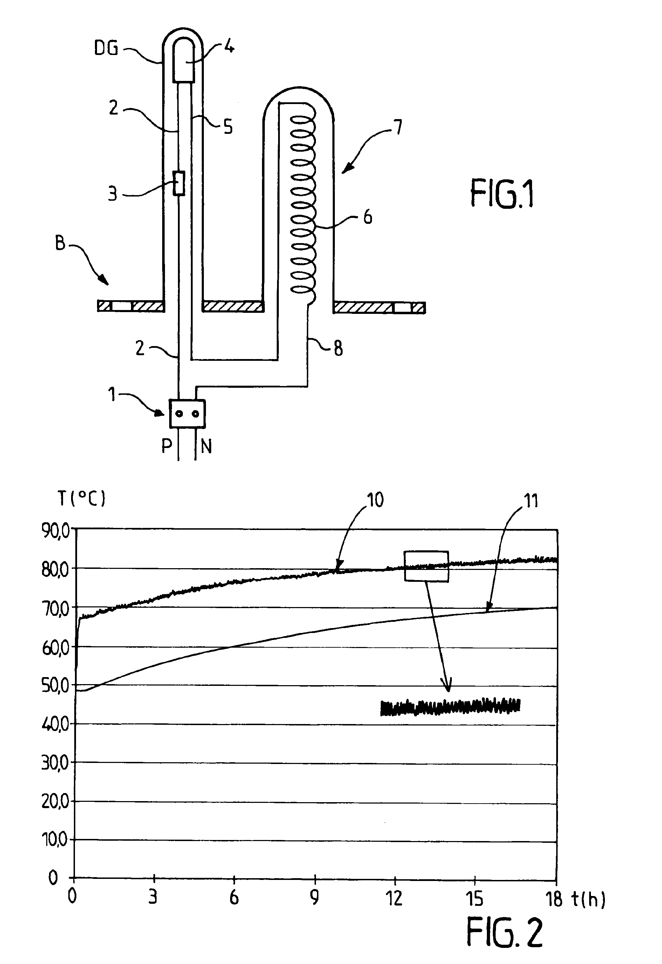

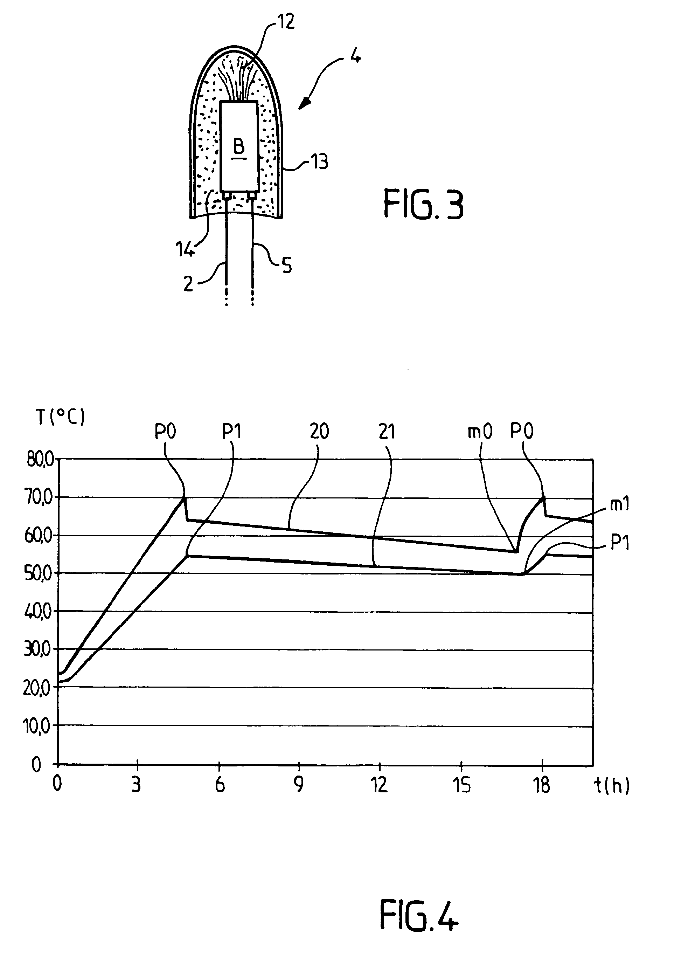

En référence aux figures 1 et 4, les éléments identiques ou fonctionnellement équivalents sont repérés par des chiffres de référence identiques.

Sur la figure 1, un dispositif selon l'invention est alimenté par une alimentation électrique comportant au moins un fil (P) de phase et un fil (N) de neutre.

Le fil (P) de phase, relié par l'intermédiaire d'un bornier (1) à un conducteur rigide (2) présentant par exemple une section conductrice de 1,5 mm².

Le fil rigide (2) est relié à un fusible (3) monté en série avec un thermostat à bilame (4).

La deuxième sortie du thermostat (4) à bilame est reliée à un fil rigide (5) d'alimentation d'une résistance électrique (6) insérée dans un corps de chauffe (7).

La résistance électrique (6) est reliée par un conducteur rigide (8) au bornier (1), pour être reliée au fil (N) de neutre.

De manière connue, une bride (B) de fermeture de chauffe-eau électrique porte le corps de chauffe (7) et un doigt de gant (DG) contenant le fusible (3) et le thermostat (4) à bilame.

Le doigt de gant (DG) est utilisé dans l'art antérieur pour protéger des moyens électromécaniques de régulation thermostatique, ou une carte électronique secondaire portant une sonde de température, un amplificateur de régulation de sécurité et un capteur de température pour le déclenchement de sécurité, comme décrit dans le document FR 2 774 153 A1.

Sur la figure 2, des essais de fonctionnement ont été effectués avec un thermostat à bilame utilisé habituellement pour la protection thermique d'un moteur électrique.

Les essais effectués pendant une durée d'environ dix-huit heures ont permis de mesurer la variation de température du thermostat à bilame et la variation de température de l'eau chaude contenue dans la cuve d'un chauffe-eau électrique équipé conformément à la figure 1.

Sur le graphique portant le temps (t) en abscisse et la température (T) en ordonnée, la courbe supérieure (10) représente la température du thermostat à bilame, tandis que la courbe inférieure (11) représente la température de l'eau chaude.

La courbe (10) et la courbe (11) présentent tout d'abord une montée en température très rapide : la température du thermostat à bilame atteint très rapidement une valeur d'environ 68°C, tandis que l'eau chaude de la cuve monte très rapidement à une température d'environ 48°C.

Cette montée extrêmement rapide révèle que le thermostat à bilame subit l'échauffement du courant qui le traverse, sans aucune étape intermédiaire.

A partir de 68°C, la température du thermostat à bilame effectue des battements entre deux courbes croissantes voisines, sans aucun arrêt ni aucune limite apparente, de sorte que la température du chauffe-eau ne peut pas être régulée efficacement.

La courbe (11) de température d'eau chaude est également constamment croissante, ce qui confirme l'absence de régulation efficace.

Les essais de fonctionnement réalisés en référence à la figure 2 indiquent par conséquent qu'un thermostat à bilame utilisé habituellement pour la protection thermique d'un moteur électrique n'est pas adapté à la régulation thermostatique d'un chauffe-eau.

Sur la figure 3, une vue partielle d'un dispositif selon l'invention représente en coupe un thermostat à bilame pourvu d'un moyen de transfert thermique.

L'ensemble (4) représenté comporte un thermostat à bilame (B) proprement dit, disponible dans le commerce.

Ce thermostat (B) à bilame est entouré d'un moyen de transfert thermique, de manière à dissiper l'échauffement produit par le passage de l'intensité électrique à l'intérieur du thermostat (B) à bilame.

Le moyen de transfert thermique comporte au moins un élément (12) en matériau électriquement isolant et thermiquement conducteur. Cet élément (12) en matériau électriquement isolant et thermiquement conducteur est interposé entre le thermostat (B) à bilame et une coque externe (13) en matériau métallique ou en matériau présentant une bonne conduction thermique.

De préférence, l'élément (12) en matériau électriquement isolant et thermiquement conducteur est constitué en silicone et relie le thermostat (B) à bilame avec la surface intérieure thermiquement conductrice de la coque externe (13).

Pour maintenir le thermostat (B) à bilame en position, le moyen de transfert thermique contient de préférence un moyen de centrage du thermostat (B) à bilame : ce centrage mécanique peut être obtenu par un remplissage de la coque (13) par un matériau électriquement isolant, par exemple par un garnissage (14) en résine époxyde.

Sur la figure 4, un essai de fonctionnement du dispositif selon l'invention est représenté sur un graphique portant en abscisse le temps (t) et en ordonnée la température (T) en degrés centigrades.

La courbe supérieure (20) représente la variation de température de l'ensemble thermostat représenté à la figure 3, tandis que la courbe (21) représente la température d'eau chaude du chauffe-eau électrique.

La montée en température est régulière dans le temps : le thermostat à bilame, pourvu d'un moyen de transfert thermique, atteint une température maximale d'environ 70°C en 4 heures, de manière linéaire et régulière, tandis que la température d'eau chaude croît régulièrement pendant le même temps jusqu'à une température d'environ 55°C.

Au pic (P0) de température de 70°C, le thermostat à bilame coupe l'alimentation électrique du corps de chauffe, ce qui provoque un refroidissement du thermostat en deux phases : une phase instantanée et une phase de décroissance plus régulière, jusqu'à une température d'environ 56°C.

Au pic de température (P0) de la température du thermostat (B) à bilame pourvu d'un moyen de transfert thermique, correspond un pic P1 de température d'eau chaude, à partir duquel la température d'eau chaude décroît régulièrement jusqu'à environ 50°C.

Lorsque la température du thermostat à bilame a diminué jusqu'à un minimum (m0) d'environ 56°C, le thermostat (B) à bilame ferme à nouveau le circuit électrique et alimente le circuit représenté à la figure 1.

Cette alimentation électrique provoque tout d'abord une montée rapide du thermostat (B) à bilame, puis une augmentation plus régulière de sa température jusqu'à un deuxième pic (P0) voisin de 70°C.

Lors de la fermeture du circuit électrique et de la réalimentation, la température d'eau chaude qui avait décru jusqu'à un minimum (m1) d'environ 50°C, remonte régulièrement jusqu'à un pic (P1) correspondant à un nouvel arrêt du chauffage.

Des essais de longue durée ont permis de vérifier que les pics (P0 et P1), ainsi que les minima (m0 et m1) restent sensiblement constants, de sorte que la régulation thermostatique connue grâce au dispositif selon l'invention est efficace et reproductive.

Avantageusement, pour éviter un vieillissement du fusible (3), on entoure celui-ci d'une gaine thermorétractable éventuellement transparente assurant une protection électrique et une isolation évitant tout contact avec la surface intérieure du doigt de gant (DG) dans lequel le fusible (3) formant coupe circuit thermique est destiné à être inséré.

Le dispositif selon l'invention permet d'éviter l'emploi d'une carte secondaire électronique telle que décrite dans le document FR 2 774 153 A1 et évite l'emploi des moyens électromécaniques de régulation thermostatique de l'art antérieur.

L'invention permet ainsi d'obtenir une régulation thermostatique efficace au moyen d'un dispositif comportant des éléments de fabrication simple et économique, d'assemblage aisé et rapide.

Le remplacement du dispositif selon l'invention est facilité par les faibles dimensions du montage destiné à être inséré dans un doigt de gant (DG), et peut être effectué sans outillage particulier.

L'invention décrite en référence à un mode de réalisation particulier n'y est nullement limitée, mais couvre au contraire toute modification de forme et toute variante de réalisation dans le cadre et l'esprit de l'invention.

## Revendications

1. Dispositif de régulation thermostatique de chauffe-eau électrique, comportant des moyens électromécaniques de régulation thermostatique destinés à être insérés dans un doigt de gant (DG) d'un chauffe-eau auquel le dispositif est destiné, **caractérisé par le fait que** lesdits moyens électromécaniques (3, 4) comportent un thermostat à bilame pourvu d'un moyen de transfert thermique.

2. Dispositif selon la revendication 1, **caractérisé par le fait que** lesdits moyens électromécaniques (3, 4) comportent un fusible (3) formant coupe-circuit thermique et monté en série avec ledit thermostat à bilame.

3. Dispositif selon la revendication 1 ou la revendication 2, **caractérisé par le fait que** le moyen de transfert thermique comporte un élément (12) en matériau électriquement isolant et thermiquement conducteur.

4. Dispositif selon la revendication 1 ou la revendication 2, **caractérisé par le fait que** le moyen de transfert thermique comporte une coque (13) externe en matériau métallique ou bon conducteur thermique.

5. Dispositif selon la revendication 1 ou la revendication 2, **caractérisé par le fait que** le moyen de transfert thermique comporte un remplissage (14) en matériau électriquement isolant.

6. Dispositif selon la revendication 1 ou la revendication 2, **caractérisé par le fait que** le moyen de transfert thermique comporte un élément en silicone (12) interposé entre le thermostat à bilame et une surface (13) thermiquement conductrice.

7. Dispositif selon la revendication 1 ou la revendication 2, **caractérisé par le fait que** le moyen de transfert thermique contient un moyen (14) d'isolation et de centrage du thermostat à bilame.

8. Dispositif selon la revendication 7, **caractérisé par le fait que** le moyen (14) d'isolation et de centrage du thermostat à bilame est réalisé en résine époxyde.

9. Dispositif selon la revendication 2, **caractérisé par le fait que** le fusible (3) formant coupe-circuit thermique est entouré d'une gaine thermorétractable.

10. Chauffe-eau électrique comportant un dispositif selon l'une quelconque des revendications 1 à 9.
